Europäisches Patentamt

European Patent Office

Office européen des brevets

(19)

(11) Numéro de publication: **0 310 504**
**A1**

## (12) DEMANDE DE BREVET EUROPEEN

(21) Numéro de dépôt: **88402451.4**

(22) Date de dépôt: **28.09.88**

(51) Int. Cl.4: **G 01 N 15/14**
**B 29 D 11/00**

(30) Priorité: **30.09.87 FR 8713515**

(43) Date de publication de la demande:
**05.04.89 Bulletin 89/14**

(84) Etats contractants désignés: **CH DE LI NL**

(71) Demandeur: **COMMISSARIAT A L'ENERGIE ATOMIQUE**
**31/33, rue de la Fédération**
**F-75015 Paris (FR)**

(72) Inventeur: **Gaucher, Jean-Claude**
**Chemin de la Vieuville**
**F-91530 Le Val Saint Germain (FR)**

**Seigneur, Alain**
**10, Route des Sablières Hameau d'Herbouvilliers**
**F-78460 Choisel (FR)**

(74) Mandataire: **Mongrédien, André et al**
**c/o BREVATOME 25, rue de Ponthieu**
**F-75008 Paris (FR)**

(54) **Procédé de fabrication d'un dispositif d'analyse optique d'un flux de microparticules et application à la fabrication d'un cytofluorimètre.**

(57) Les microparticules étant susceptibles d'émettre une lumière, on moule selon le procédé, autour d'une buse (4) qui est faite d'un matériau transparent à ladite lumière et dont le trou (8) est prévu pour le passage du flux, un élément optique (6) qui est fait d'une matière transparente à ladite lumière, de température de fusion inférieure à celle du matériau de la buse et d'indice optique voisin de celui de ce matériau, et qui comporte un dioptre (10) admettant un axe optique qui passe par le trou. Le cytofluorimètre incorpore notamment le dispositif (2) obtenu par ce procédé.

FIG. 1

EP 0 310 504 A1

**Description**

## PROCEDE DE FABRICATION D'UN DISPOSITIF D'ANALYSE OPTIQUE D'UN FLUX DE MICROPARTICULES ET APPLICATION A LA FABRICATION D'UN CYTOFLUORIMETRE

La présente invention concerne un procédé de fabrication d'un dispositif d'analyse optique d'un flux de microparticules.

Par "microparticules", on entend notamment des cellules biologiques animales ou végétales, ou encore des éléments subcellulaires, tels que des chromosomes.

Le procédé objet de l'invention s'applique en particulier à la fabrication d'un cytofluorimètre.

On connaît déjà par les documents US-A-4 348 107 et US-A-4673289 (ce dernier correspondant à la demande de brevet français n° 8409676 du 20 juin 1984) des dispositifs d'analyse optique d'un flux de microparticules. Cependant, aucun de ces documents ne décrit un procédé de fabrication de tels dispositifs, qui soit suffisamment simple et économique, pour conduire à des dispositifs d'un coût raisonnable, permettant la fabrication de certains systèmes d'analyse, par exemple des appareils simplifiés de cytofluorimètrie en flux, dont le coût ne soit pas excessif.

De nombreux laboratoires d'analyse biologique vont avoir de plus en plus besoin de tels cytofluorimètres pour effectuer des analyses de routine, par exemple dans le domaine de l'hématologie ou dans le domaine agro-alimentaire (notamment pour l'analyse du lait).

La présente invention a justement pour objet un procédé de fabrication d'un dispositif d'analyse optique d'un flux de microparticules, qui est simple et conduit à un dispositif d'un coût raisonnable.

De façon précise, la présente invention a pour objet un procédé de fabrication d'un dispositif d'analyse optique d'un flux de microparticules susceptibles d'émettre une lumière, procédé caractérisé en ce qu'on moule, autour d'une buse qui est faite d'une d'un matériau transparent à ladite lumière et dont le trou est prévu pour le passage du flux, un élément optique qui est fait d'une matière transparente à ladite lumière, de température de fusion inférieure à celle du matériau de la buse et d'indice optique voisin de celui de ce matériau, et qui comporte un dioptre admettant un axe optique qui passe par le trou.

De préférence afin de réduire encore le coût du dispositif, la matière dont est fait l'élément optique est une matière plastique et on moule cet élément optique par injection.

De préférence, ledit dioptre est sphérique et convexe.

De préférence également, le premier point de Weierstrass du dioptre sphérique est confondu avec le centre du trou.

Ceci constitue une optique de grande ouverture numérique, ce qui permet de disposer à sa suite une optique de moindre ouverture, sans introduire d'aberrations sphériques.

L'utilisation du dioptre sphérique convexe dans le dispositif contribue à conférer à ce dispositif un rendement de collection élevé, mais, de préférence, afin d'accroître ce rendement, l'élément optique comporte, à l'opposé du dioptre sphérique par rapport au trou, une paroi convexe de forme sphérique, centrée sur le trou, et après avoir réalisé le dispositif, on rend ladite paroi optiquement réflectrice.

La buse utilisée peut être une buse du commerce, telle qu'un saphir percé d'un orifice calibré. Cependant, dans un mode de mise en oeuvre particulier de l'invention, on forme préalablement la buse en tronçonnant un tube capillaire, en réalisant suivant l'axe du tronçon obtenu deux alésages à fonds sensiblement coniques laissant subsister une portion du capillaire, portion qui constitue ainsi ledit trou, et convergeant vers cette portion.

La présente invention concerne également le dispositif d'analyse optique obtenu par le procédé de l'invention et son application à un cytofluorimètre, comprenant l'assemblage :

- d'un dispositif d'analyse optique d'un flux de microparticules, telles que cellules biologiques ou éléments subcellulaires, susceptibles d'émettre une lumière lorsqu'elles sont soumises à une excitation lumineuse, le flux étant dirigé suivant un axe,

- de moyens de formation d'un faisceau lumineux d'excitation de ces microparticules, et

- de moyens d'analyse de ladite lumière,

dans lequel le dispositif est préalablement fabriqué par le procédé également objet de l'invention, mentionné plus haut.

Après avoir fabriqué le dispositif d'analyse optique, on peut rendre ce dernier solidaire d'une pièce comportant une cavité qui communique avec le trou de la buse, cette pièce étant rendue solidaire d'un premier et d'un second tubes dont des extrémités respectives débouchent dans ladite cavité, en regard de la buse, le premier tube étant prévu pour la circulation d'une suspension de microparticules en direction dudit trou, l'extrémité du second tube étant plus éloignée du trou que l'extrémité du premier tube et le second tube étant prévu pour la circulation d'un liquide destiné à gainer la suspension de microparticules avant passage de celle-ci à travers le trou.

Les deux tubes peuvent être électriquement conducteurs et reliés à des moyens prévus pour l'analyse électrique de cellules (mesures de type "COULTER").

Dans ce cas, on oriente de préférence le dispositif muni de ladite pièce et des tubes de façon que les tubes soient sensiblement verticaux et placés plus bas que le dispositif.

Le flux de cellules est alors orienté de bas en haut.

Ceci permet l'élimination de bulles d'air lors de la mise en fonctionnement du cytofluorimètre, et le remplissage de l'alésage disposé au-dessus de la buse, donc le contact électrique avec une électrode de retour également prévue pour la mesure de type "COULTER".

Il est également possible d'orienter le dispositif muni de ladite pièce et des tubes de façon que les tubes soient sensiblement verticaux et placés plus haut que le dispositif. Le flux de cellules est alors orienté de haut en bas. Cette façon de faire s'impose dans un cytofluorimètre prévu pour le tri de cellules biologiques.

Enfin, dans une réalisation particulière, les moyens de formation du faisceau lumineux d'excitation comportent des moyens de focalisation de celui-ci, et on prévoit sur le dispositif d'analyse optique une face d'entrée de ce faisceau lumineux, disposée de façon à permettre l'envoi du faisceau focalisé dans ledit trou, perpendiculairement à l'axe optique du dioptre et à l'axe du flux de microparticules.

On peut alors prévoir sur ce dispositif, à l'opposé de la face d'entrée par rapport au trou, une face de sortie de lumière, et disposer en regard de cette face de sortie, un moyen d'arrêt du faisceau d'excitation, après interaction de celui-ci avec le flux de licroparticules, ce moyen d'arrêt étant apte à laisser passer de part et d'autre de lui-même, une lumière diffusée sous de petits angles par les microparticules.

La présente invention sera mieux comprise à la lecture de la description qui suit, d'exemples de réalisation donnés à titre purement indicatif et nullement limitatif, en référence aux dessins annexés sur lesquels :

- la figure 1 est une vue schématique et partielle d'un cytofluorimètre comportant un dispositif fabriqué par un procédé conforme à l'invention,

- la figure 2 est une vue de dessus schématique et partielle du cytofluorimètre représenté sur la figure 1,

- la figure 3 est une vue de côté schématique et partielle de ce cytofluorimètre,

- la figure 4 est une vue schématique et partielle d'un autre cytofluorimètre comportant un dispositif obtenu par un procédé conforme à l'invention, et

la figure 5 illustre schématiquement un procédé conforme à l'invention et permettant de fabriquer le dispositif utilisé dans le cytofluorimètre représenté sur la figure 1.

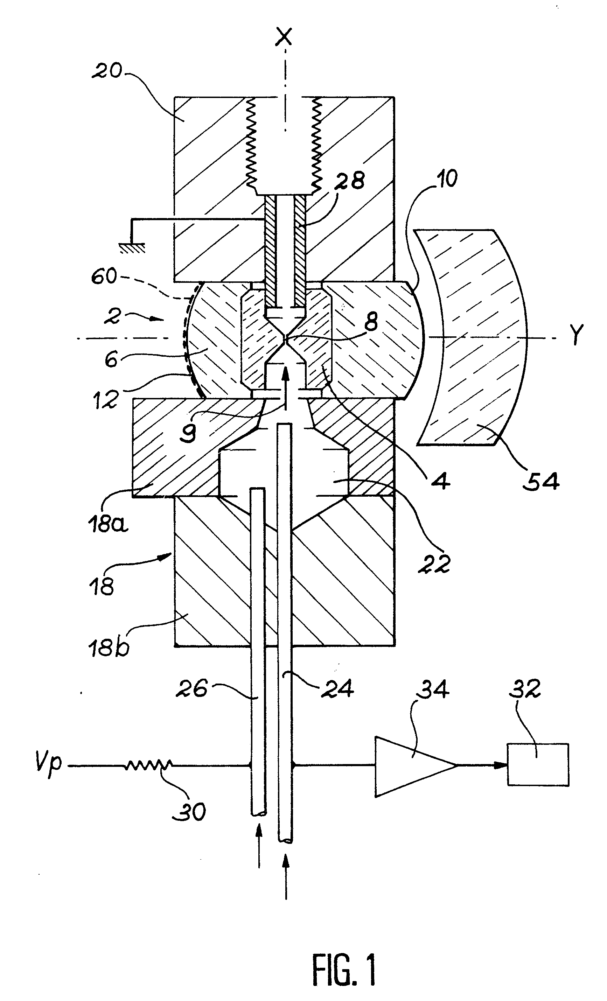

Sur la figure 1, on a représenté schématiquement et partiellement un cytofluorimètre comportant un dispositif d'analyse optique 2 obtenu par un procédé selon la présente invention. Ce dispositif 2 comprend, autour d'une buse 4, un élément optique 6 de collection de lumière. La buse 4 comporte un trou 8 par exemple cylindrique, d'axe vertical X, destiné au passage d'un flux 9 de cellules biologiques que l'on souhaite étudier au moyen du cytofluorimètre et qui est dirigé suivant l'axe X.

L'élément 6 de collection de lumière, notamment de lumière de fluorescence émise par le flux cellulaire, est limité inférieurement et supérieurement par deux faces planes horizontales. De part et d'autre du trou 8, la buse comporte deux alésages qui débouchent respectivement sur ces faces.

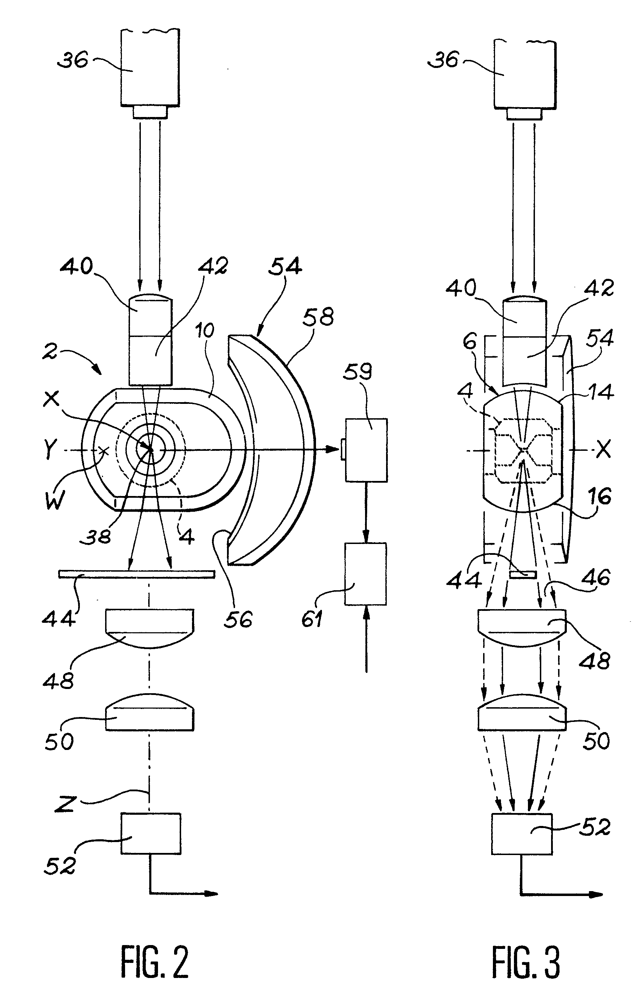

Entre ces faces, l'élément est limité :
- par un premier 10 et un second 12 dioptres sphériques convexes ayant un même axe de symétrie Y horizontal qui passe par le centre du trou 8, et
- par deux faces 14 et 16 (voir figure 3) symétriques l'une de l'autre part rapport au plan défini par les axes X et Y et constituant des portions d'un cylindre de révolution d'axe Y.

Le dispositif 2 monobuse est maintenu entre des faces planes respectives d'une pièce inférieure 18 et d'une pièce supérieure 20 électriquement isolantes. La pièce inférieure 18 résulte de l'assemblage de deux parties 18a, 18b prévues pour qu'après assemblage, la pièce 18 présente une cavité 22 qui débouche sur la face supérieure de cette pièce 18 en regard de l'alésage inférieur de la buse 4. La pièce 18 est rendue solidaire d'un premier tube 24 qui est disposé suivant l'axe X et dont une extrémité débouche dans la cavité 22 et se trouve à proximité de la face supérieure de la pièce 18. La pièce 18 est également rendue solidaire d'un second tube 26 qui est parallèle au tube 24 et dont une extrémité débouche également dans la cavité 22 mais se trouve plus éloignée de la face supérieure de la pièce 18 que l'extrémité du tube 24.

Le tube 24 permet la circulation d'une suspension de cellules biologiques en direction de la buse 4 et le tube 26 permet d'introduire dans la chambre 22 un liquide entraîneur, destiné à former une gaine liquide autour de la suspension cellulaire issue du tube 24.

La pièce supérieure 20 est munie d'un troisième tube 28 d'axe X qui communique avec l'alésage supérieur de la buse 4 et qui permet l'évacuation du flux cellulaire hors du cytofluorimètre (par exemple dans un conteneur non représenté).

Le cytofluorimètre représenté sur la figure 1 est notamment destiné à effectuer des mesures électriques de type COULTER en vue de compter électriquement le nombre de cellules et de mesurer électriquement le volume de celles-ci. A cet effet, les tubes 24, 26 et 28 sont électriquement conducteurs. Ils sont par exemple faits d'un métal tel que le platine. Les tubes 26 et 28 permettent la polarisation électrique du trou 8 de la buse 4. Un potentiel Vp de polarisation est appliqué au tube 26 par l'intermédiaire d'une résistance électrique appropriée 30 et le tube 28 est mis à la masse. Le tube 24 est relié à des moyens électroniques de mesure appropriés 32 par l'intermédiaire d'un préamplificateur 34 prévu pour fournir un signal électrique représentatif du volume cellulaire.

Dans le cytofluorimètre représenté sur la figure 1, le flux cellulaire est orienté de bas en haut, ce qui est préférable à l'orientation inverse, de façon à assurer l'élimination de bulles d'air lors de la mise en fonctionnement du cytofluorimètre et permettre un bon contact du tube 28, formant une électrode supérieure, avec le liquide remplissant l'alésage supérieur.

L'excitation optique du flux cellulaire est obtenue au moyen d'une source lumineuse appropriée 36, de préférence un laser, dont le faisceau est dirigé en direction de la face 14 ou face d'entrée, suivant un axe Z perpendiculaire aux axes X et Y. Le faisceau laser est focalisé sur le centre 38 du trou de la buse 4 pour intercepter le flux de cellules.

En pratique, le trou est un microtrou qui est sensiblement confondu avec son centre 38.

La focalisation du faisceau laser est réalisée au moyen d'une lentille de focalisation 40 accouplée à une lentille cylindrique 42 permettant d'obtenir une focalisation elliptique afin d'éclairer le flux cellulaire de façon homogène. On voit que la lentille cylindrique 42 comporte en regard de la face d'entrée 14 une face cylindrique, de génératrice parallèle à cette face 14.

En regard de la face 16 ou face de sortie du faisceau laser, est disposé un masque 44 en forme de plaquette rectangulaire, allongée suivant l'axe Y et étroite suivant l'axe X. Ce masque est prévu pour absorber le faisceau laser ayant traversé le dispositif 2, tout en laissant passer de part et d'autre des côtés dudit masque qui sont parallèles à l'axe Y, la lumière 46 diffusée par les cellules sous de faibles angles par rapport à l'axe Z du faisceau laser. Cette lumière 46 est focalisée au moyen de lentilles 48, 50 appropriées, sur un photodétecteur 52 qui fournit ainsi un signal représentatif du paramètre de diffusion aux petits angles.

Un autre élément optique 54, correspondant à l'élément référencé 10 dans le brevet US-A-4673289 mentionné plus haut est disposé en regard du dioptre sphérique convexe 10. L'élément 54 est délimité par un premier dioptre sphérique concave 56 et par un second dioptre sphérique convexe 58 admettant un axe de symétrie commun confondu avec l'axe Y. Le dioptre 56 est directement en regard du dioptre 10.

De préférence, pour éviter les aberrations sphériques, le premier point de Weierstrass du dioptre 10 est confondu avec le centre 38 du trou de la buse et le second point de Weierstrass de ce dioptre 10 constitue à la fois le centre du premier dioptre 56 et le premier point de Weiertrass du second dioptre 58.

Pour accroître le rendement de collection de l'élément optique 6, le dioptre 12 de celui-ci est revêtu d'une couche 60 métallique par exemple en aluminium (figure 1) afin de renvoyer vers le dioptre 10 les rayons lumineux émis en direction du dioptre 12. Une portion (non représentée) de ce dernier peut être non métallisée et constituer ainsi une fenêtre permettant d'observer l'intérieur du dispositif 2 lors du réglage du cytofluorimètre.

De façon connue, la lumière issue de l'élément optique 54 est ensuite envoyée, par l'intermédiaire de moyens optiques non représentés, sur des moyens de photodétection 59 et le cytofluorimètre est muni de moyens de traitement 61 qui, à partir des signaux fournis par les différents moyens de photodétection qu'il comporte, permettent d'effectuer les analyses voulues (voir par exemple le brevet US-A-4673289).

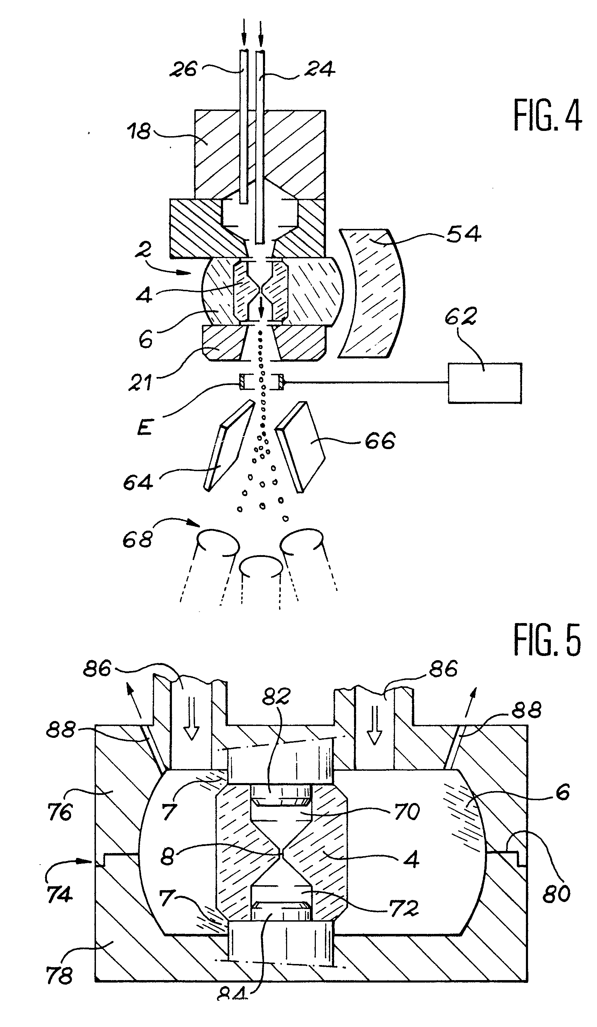

Sur la figure 4, on a représenté schématiquement et partiellement un autre cytofluorimètre comportant également le dispositif d'analyse optique 2. Ce cytofluorimètre permet de trier les cellules du flux cellulaire mais pas d'effectuer des mesures électriques du type COULTER.

Dans le cytofluorimètre représenté sur la figure 4, le flux cellulaire circule de haut en bas. A cet effet, l'ensemble des composants 2, 18, 26, 24 du cytofluorimètre de la figure 1 est inversé (a subi une rotation de 180° autour de l'axe Y), le tube 28 est supprimé, la pièce 20 est remplacée par une pièce 21 de faible épaisseur traversée par un trou qui communique avec l'alésage de la buse 4, qui est à présent le plus bas.

Le flux de cellule sort ainsi à l'air libre dès qu'il a franchi l'orifice de la buse ; il se trouve alors fractionné en gouttes par des moyens ultrasonores connus et non représentés.

Le cytofluorimètre représenté sur la figure 4 comporte en outre des moyens électroniques 62 destinés à commander la charge de ces gouttes et le signe de cette charge par l'intermédiaire d'une électrode annulaire E disposée à l'air libre en regard de la sortie inférieure de la pièce 21, de manière à pouvoir être traversée par les gouttes, et en fonction de signaux reçus par différents moyens photodétecteurs non représentés du cytofluorimètre, qui sont destinés à détecter la lumière de fluorescence émise par les cellules convenablement marquées, sous l'impact d'un faisceau laser qui est focalisé sur le trou de la buse 4 et qui excite les cellules.

Une paire de plaques conductrices 64 et 66 respectivement portées à une haute tension positive et à une haute tension négative sont disposées à la suite de l'électrode E, de part et d'autre du flux de cellules. Ces plaques permettent d'envoyer sélectivement les gouttes selon leur charge dans des récipients 68.

La figure 5 illustre schématiquement un mode de mise en oeuvre particulier du procédé objet de l'invention, permettant la fabrication d'un dispositif d'analyse optique tel que le dispositif 2 décrit plus haut. Pour réaliser ce dispositif, on commence par fabriquer une buse 4 et pour ce faire, on utilise un tube capillaire à paroi épaisse de préférence, en verre, commercialement disponible, du type tube pour thermomètre par exemple. Ce tube capillaire est tronçonné perpendiculairement à son axe et, au moyen d'un outil diamanté, on usine respectivement à partir des deux faces du tronçon obtenu deux portées ou alésages cylindro-coniques 70 et 72 suivant l'axe dudit tronçon. L'usinage est réalisé de façon qu'il subsiste au centre dudit tronçon une petite portion du capillaire et que les parties coniques des deux alésages convergent vers cette portion. Cette dernière constitue le microtrou de la buse.

L'élément optique 6 dont il est question plus haut est ensuite obtenu par moulage par injection d'une matière plastique d'indice optique voisin de celui du verre. Cette matière plastique est par exemple le plexiglas (marque déposée). Pour ce faire, on utilise un moule de forme appropriée dans lequel on positionne précisément la buse obtenue.

Sur la figure 5, on a représenté schématiquement le moule 74 permettant de fabriquer le dispositif 2. Ce moule comporte deux demi-coquilles 76 et 78 destinées à être appliquées l'une contre l'autre suivant un plan de joint 80. On aperçoit également des pions de centrage 82 et 84 qui sont respectivement solidaires des demi-coquilles 76 et 78. Ces pions, sont insérables dans les parties cylindrique des alésages 70 et 72 et permettent de maintenir en place la buse dans le moule. L'une 76 des demi-coquilles est également pourvue de buses 86 d'injection de la matière plastique et d'évents 88 permettant l'évacuation de gaz lors du moulage par injection.

Après moulage de l'élément optique 6, le dispositif 2 est démoulé et un polissage peut être effectué au niveau du joint ; on peut alors réaliser la métallisation du dioptre 12. On notera sur la figure 5 que le moule est prévu pour qu'après démoulage de l'élément 6, ce dernier présente des épaulements 7 qui emprisonnent la buse 4 à la périphérie des faces d'extrémité de celle-ci.

A titre purement indicatif et nullement limitatif, le tube capillaire a une paroi de l'ordre de 3 mm d'épaisseur, la hauteur du tronçon de tube capillaire est de l'ordre de 6 mm, le trou 8 à une hauteur de l'ordre de 100 à 120 micromètres et un diamètre de l'ordre de 70 micromètres et les parties coniques des alésages 70 et 72 ont un demi-angle au sommet de l'ordre de 45°.

## Revendications

1. Procédé de fabrication d'un dispositif (2) d'analyse optique d'un flux de microparticules susceptibles d'émettre une lumière, procédé caractérisé en ce qu'on moule, autour d'une buse (4) qui est faite d'un matériau transparent à ladite lumière et dont le d'un trou (8) est prévu pour le passage du flux, un élément optique (6) qui est fait d'une matière transparente à ladite lumière, de température de fusion inférieure à celle du matériau de la buse et d'indice optique voisin de celui de ce matériau, et qui comporte un dioptre (10) admettant un axe optique qui passe par le trou.

2. Procédé selon la revendication 1, caractérisé en ce que la matière dont est fait l'élément optique (6) est une matière plastique et en ce qu'on moule cet élément optique par injection.

3. Procédé selon l'une quelconque des revendications 1 et 2, caractérisé en ce que ledit dioptre (10) est sphérique et convexe.

4. Procédé selon la revendication 3, caractérisé en ce que le premier point de Weierstrass du dioptre sphérique (10) est confondu avec le centre du trou (8).

5. Procédé selon l'une quelconque des revendications 3 et 4, caractérisé en ce que l'élément optique (6) comporte, à l'opposé du dioptre sphérique (10) par rapport au trou (8), une paroi convexe de forme sphérique (12), centrée sur le trou et en ce qu'après avoir réalisé le dispositif (2), on rend ladite paroi optiquement réflectrice.

6. Procédé selon l'une quelconque des revendications 1 à 5, caractérisé en ce qu'on forme préalablement la buse (4) en tronçonnant un tube capillaire, en réalisant suivant l'axe du tronçon obtenu deux alésages à fonds sensiblement coniques (70, 72) laissant subsister une portion du capillaire, portion qui constitue ainsi ledit trou (8), et convergeant vers cette portion.

7. Dispositif d'analyse optique obtenu par le procédé selon l'une quelconque des revendications 1 à 6.

8. Procédé de fabrication d'un cytofluorimètre, ce procédé comprenant l'assemblage :
- d'un dispositif (2) d'analyse optique d'un flux (9) de microparticules telles que cellules biologiques ou éléments subcellulaires, susceptibles d'émettre une lumière lorsqu'elles sont soumises à une excitation lumineuse, le flux étant dirigé suivant un axe,
- de moyens (36, 40, 42) de formation d'un faisceau lumineux d'excitation de ces microparticules, et
- de moyens d'analyse de ladite lumière (59, 61), procédé caractérisé en ce que le dispositif (2) est préalablement fabriqué par le procédé selon l'une quelconque des revendications 1 à 6.

9. Procédé selon la revendication 8, caractérisé en ce qu'après avoir fabriqué le dispositif (2), on rend ce dernier solidaire d'une pièce (18) comportant une cavité (22) qui communique avec le trou (8) de la buse (4), cette pièce étant rendue solidaire d'un premier (24) et d'un second (26) tubes dont des extrémités respectives débouchent dans ladite cavité, en regard de la buse, le premier tube étant prévu pour la circulation d'une suspension de microparticules en direction dudit trou, l'extrémité du second tube étant plus éloignée du trou que l'extrémité du premier tube et le second tube étant prévu pour la circulation d'un liquide destiné à gainer la suspension de microparticules avant passage de celle-ci à travers le trou.

10. Procédé selon la revendication 9, caractérisé en ce que les deux tubes (24, 26) sont électriquement conducteurs et reliés à des moyens (30, 34) prévus pour l'analyse électrique de cellules.

11. Procédé selon la revendication 10, caractérisé en ce qu'on oriente le dispositif (2) muni de ladite pièce (18) et des tubes (24, 26) de façon que les tubes soient sensiblement verticaux et placés plus bas que le dispositif.

12. Procédé selon la revendication 9, caractérisé en ce qu'on oriente le dispositif (2) muni de ladite pièce (18) et des tubes (24, 26) de façon que les tubes soient sensiblement verticaux et placés plus haut que le dispositif.

13. Procédé selon l'une quelconque des revendications 8 à 12, caractérisé en ce que les moyens de formation du faisceau lumineux d'excitation comportent des moyens (40, 42) de focalisation de celui-ci, et en ce qu'on prévoit sur le dispositif (2) d'analyse optique une face d'entrée (14) de ce faisceau lumineux, disposée de façon à permettre l'envoi du faisceau focalisé dans ledit trou (8), perpendiculairement à l'axe optique du dioptre (10) et à l'axe du flux (9) de microparticules.

14. Procédé selon la revendication 13, caractérisé en ce que l'on prévoit sur le dispositif (2), à l'opposé de la face d'entrée (14) par rapport au trou (8), une face de sortie de lumière (16), et en ce que l'on dispose en regard de cette face de sortie, un moyen (44) d'arrêt du faisceau d'excitation, après interaction de celui-ci avec le flux de microparticules, ce moyen d'arrêt étant apte à laisser passer de part et d'autre de lui-même, une lumière (46) diffusée sous de petits angles par les microparticules.

15. Cytofluorimètre obtenu par le procédé selon l'une quelconque des revendications 8 à 14.

FIG. 1

FIG. 2

FIG. 3

FIG. 4

FIG. 5

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A,D | EP-A-0 165 868  (CEA)<br>* Pages 7-11; figures 1-3 *<br>--- | 1 | G 01 N  15/14<br>B 29 D  11/00 |
| A | JAPAN PLASTICS AGE, vol. 23, no. 201, janvier-février 1985, pages 31-34, Tokyo, JP; S. MATSUDA et al.: "Platsics lens by injection & compression molding"<br>* Pages 31-34 *<br>--- | | |
| A | PATENT ABSTRACTS OF JAPAN, vol. 7, no. 199 (M-240)[1344], 3 septembre 1983, page 34 M 240; & JP-A-58 98 225 (HITACHI SEISAKUSHO K.K.) 11-06-1983<br>* Résumé *<br>--- | | |
| A | PATENT ABSTRACTS OF JAPAN, vol. 9, no. 14 (M-352)[1737], 22 janvier 1985, page 54 M 352; & JP-A-59 162 025 (KONISHIROKU SHASHIN KOGYO K.K.) 12-09-1984<br>* Résumé *<br>----- | | |

DOMAINES TECHNIQUES RECHERCHES (Int. Cl.4)

G 01 N  15/14
B 29 D  11/00

Le présent rapport a été établi pour toutes les revendications

| Lieu de la recherche | Date d'achèvement de la recherche | Examinateur |
|---|---|---|
| LA HAYE | 05-01-1989 | BOEHM CH.E.D. |

EPO FORM 1503 03.82 (P0402)